# EUROPÄISCHE PATENTSCHRIFT

(11) **EP 3 884 347 B1**
(45) Veröffentlichungstag und Bekanntmachung des Hinweises auf die Patenterteilung: **28.02.2024**
(21) Anmeldenummer: 20703685.6
(22) Anmeldetag: 02.01.2020
(51) Int. Cl.: G05B 19/4061, B25J 9/16

(54) **KOLLISIONSPRÜFUNG AUF BASIS HÖHERWERTIGER GEOMETRIE**
COLLISION DETECTION BASED ON HIGH QUALITY GEOMETRY
DÉTECTION DE COLLISION À BASE DE GÉOMÉTRIE À VALEUR ÉLEVÉE

(30) Priorität: 14.01.2019 EP 19151628
(43) Veröffentlichungstag der Anmeldung: 29.09.2021
(73) Patentinhaber: Siemens Aktiengesellschaft, 80333 München (DE)
(72) Erfinder: HAMM, Carsten, 91330 Eggolsheim (DE); HANDECK, Jörg, 91058 Erlangen (DE); SAUER, Tomas, 90475 Nürnberg (DE)
(74) Vertreter: Siemens Patent Attorneys
(86) Internationale Anmeldenummer: PCT/EP2020/050017
(87) Internationale Veröffentlichungsnummer: WO 2020/148097

(56) Entgegenhaltungen:
- WO-A1-2017/146890
- US-A1- 2001 048 857
- US-A1- 2003 109 780
- US-A1- 2016 242 858

## Beschreibung

Die vorliegende Erfindung geht aus von einem Überwachungsverfahren für den Betrieb einer Maschine, die mehrere Achsen aufweist, mittels derer Elemente der Maschine relativ zueinander lagegeregelt verfahren werden,
- wobei eine Überwachungseinrichtung eine Anzahl von Gruppen von Lagewerten der Achsen entgegennimmt, wobei die Gruppen von Lagewerten jeweils die Lage der Elemente der Maschine relativ zueinander festlegen,
- wobei die Überwachungseinrichtung anhand einer Modellierung der Elemente der Maschine, einer Modellierung der Kinematik der Elemente der Maschine für die Gruppen von Lagewerten der Anzahl von Gruppen von Lagewerten jeweils ermittelt, welches Element der Maschine jeweils welche Oberfläche und/oder welches Volumen in einem Arbeitsraum der Maschine einnimmt,
- wobei die Überwachungseinrichtung anhand der ermittelten Oberflächen und/oder Volumina prüft, ob eine Kollision von Elementen der Maschine untereinander droht, und
- wobei die Überwachungseinrichtung in Abhängigkeit vom Ergebnis der Prüfung reagiert.

Die vorliegende Erfindung geht weiterhin aus von einem Computerprogramm für eine Überwachungseinrichtung, wobei das Computerprogramm Maschinencode umfasst, der von der Überwachungseinrichtung abarbeitbar ist, wobei die Abarbeitung des Maschinencodes durch die Überwachungseinrichtung bewirkt, dass die Überwachungseinrichtung ein derartiges Überwachungsverfahren durchführt.

Die vorliegende Erfindung geht weiterhin aus von einer Überwachungseinrichtung, wobei die Überwachungseinrichtung mit einem derartigen Computerprogramm programmiert ist, so dass die Überwachungseinrichtung im Betrieb ein derartiges Überwachungsverfahren durchführt.

Die vorliegende Erfindung geht weiterhin aus von einer Kombination einer derartigen Überwachungseinrichtung mit einer Steuereinrichtung zum Steuern des Betriebs einer Maschine, die mehrere Achsen aufweist, mittels derer Elemente der Maschine relativ zueinander lagegeregelt verfahren werden.

Die vorliegende Erfindung geht weiterhin aus von einer Maschine, wobei die Maschine mehrere Achsen aufweist, mittels derer Elemente der Maschine relativ zueinander lagegeregelt verfahren werden, wobei die Maschine von einer Steuereinrichtung gesteuert wird, wobei der Steuereinrichtung eine derartige Überwachungseinrichtung zugeordnet ist.

Im Zuge der zunehmenden Automatisierung von Bearbeitungs- und Verarbeitungsvorgängen der industriellen Produktion wird es immer wichtiger, Schäden an Mensch und Maschine, die aufgrund einer Kollision auftreten können, zu vermeiden. Dies bedingt eine schnelle, robuste und zuverlässige Erkennung der Gefahr einer Kollision, also bereits im Vorfeld, bevor die Kollision tatsächlich aufgetreten ist.

Um in automatisierter Art und Weise im Vorfeld eine Kollision erkennen zu können, ist eine geometrische Modellierung der Maschine und der relevanten Elemente der Maschine erforderlich. Die Modellierung kann sowohl ortsfeste Elemente der Maschine (beispielsweise den Grundkörper oder eine Einhausung der Maschine) als auch bewegliche Elemente der Maschine (beispielsweise eine Achse oder einen Roboterarm) umfassen. In manchen Fällen umfasst die Modellierung auch Elemente, deren Kontur sich während des Betriebs der Maschine ändert (typischerweise das Werkstück).

Eine gute Kollisionserkennung beruht auf einem Algorithmus, mittels dessen eine qualitativ hochwertige Entscheidung über eine mögliche drohende Kollision getroffen werden kann. Dabei gilt es insbesondere, eine konkret drohende Kollision bereits im Vorfeld abzuwenden, beispielsweise durch Anhalten der Maschine. In manchen Fällen kann die Kollisionsrechnung zusätzlich dazu verwendet werden, den Abstand zwischen Elementen der Maschine zu ermitteln und die ermittelten Abstände im Rahmen der Ansteuerung zu berücksichtigen. Damit kann der Betrieb der Maschine optimiert werden, beispielsweise durch entsprechende Einstellung von Geschwindigkeitsgrenzwerten.

Im Stand der Technik sind Algorithmen bekannt, bei denen die Elemente der Maschine auf der Basis von Dreiecksnetzen modelliert werden. Die einzelnen Elemente werden also aus dreieckigen Flächen zusammengesetzt. Ein Beispiel für diese Vorgehensweise ist die STL (= Standard Tessellation Language). In vielen Fällen sind hierbei die Kanten jeweils zwei Dreiecken gemeinsam und die Ecken jeweils mehreren Dreiecken gemeinsam. Im Stand der Technik sind weiterhin Algorithmen bekannt, bei denen die Volumenkörper durch elementargeometrische Figuren wie beispielsweise Kugel, Quader, Kegel oder Zylinder approximiert werden. In beiden Fällen ist zur Steigerung der Genauigkeit der Modellierung ein überproportionaler zusätzlicher Aufwand erforderlich. Dies gilt sowohl für die Modellierung als solche als auch für die Kollisionsüberwachung. In der Praxis muss daher stets ein Kompromiss zwischen der Genauigkeit der Modellierung und der Geschwindigkeit, mit der die Überwachung auf eine drohende Kollision erfolgen soll, getroffen werden.

Aus der US 2016/0 242 858 A1 ist ein Verfahren bekannt, bei dem mittels einer Kamera ein Behandlungsbereich eines Patienten überwacht wird. Die Behandlung kann mittels eines maschinell bewegten Behandlungswerkzeugs einer Behandlungseinrichtung erfolgen. Sowohl an den Gliedmaßen des Patienten als auch an dem Behandlungswerkzeug sind Positionsgeber angeordnet, die mittels der Kamera erfasst werden. Elemente der Behandlungseinrichtung, Gliedmaßen des Patienten und ein Erfassungsbereich der Kamera können mittels Splines modelliert werden. Es wird überwacht, wann Elemente der Behandlungseinrichtung oder Gliedmaßen des Patienten Sichtbereiche, die mittels der Kamera erfasst werden sollen, verdecken. In diesem Fall wird eine Meldung ausgegeben, so dass ein Bediener der Behandlungseinrichtung eine Umpositionierung der Kamera vornehmen kann.

Die Aufgabe der vorliegenden Erfindung besteht darin, Möglichkeiten zu schaffen, mittels derer eine hochgenaue Modellierung der Elemente der Maschine mit einem vergleichsweise geringen Rechenaufwand möglich ist.

Die Aufgabe wird durch ein Überwachungsverfahren mit den Merkmalen des Anspruchs 1 gelöst. Vorteilhafte Ausgestaltungen des Überwachungsverfahrens sind Gegenstand der abhängigen Ansprüche 2 bis 6.

Erfindungsgemäß wird ein Überwachungsverfahren der eingangs genannten Art dadurch ausgestaltet,
- dass die Überwachungseinrichtung zumindest einen Teil der Oberfläche mindestens eines der Elemente der Maschine durch eine Anzahl von zweidimensionalen Splines modelliert, die durch jeweilige Knotenpunkte und jeweilige Kontrollpunkte, gegebenenfalls zuzüglich Gewichte, definiert werden,
- dass die Überwachungseinrichtung anhand der Kontrollpunkte des jeweiligen Splines für den jeweiligen Abschnitt eine jeweilige Einhüllende bestimmt, welche das mindestens eine Element in dem jeweiligen Abschnitt einhüllt,
- dass gerade Verbindungslinien der Kontrollpunkte des jeweiligen Splines Begrenzungslinien von Flächen der jeweiligen Einhüllenden sind und
- dass die Überwachungseinrichtung die jeweilige Einhüllende als von dem mindestens einen Element der Maschine in dem jeweiligen Abschnitt eingenommene Oberfläche verwendet.

Ein zweidimensionaler Spline im Sinne der vorliegenden Erfindung ist ein Spline, der sich im dreidimensionalen Raum erstreckt, wobei die Art und Weise, wie der Spline sich im dreidimensionalen Raum erstreckt, also die Lage, die Orientierung und Kurvenform des Splines, durch Variable in zwei Dimensionen festgelegt ist.

Der jeweilige Spline beschreibt vorzugsweise in beiden Dimensionen des Splines jeweils mindestens eine Funktion 3. Grades. Eine Darstellung des entsprechenden Teils des entsprechenden Elements über Splines ist in der Regel verlustfrei möglich, also ohne Approximation der tatsächlichen Kontur, weil die tatsächlichen Flächen ursprünglich Splineflächen waren bzw. alle mittels eines CAD-Systems generierten Flächendarstellungen mit beliebiger Genauigkeit in eine Splinefläche transformiert werden können.

Ein Spline kann, wie Fachleuten allgemein bekannt ist, durch Kontrollpunkte und Knotenpunkte und gegebenenfalls Gewichte eindeutig und vollständig beschrieben werden. Eine derartige Beschreibung ist auch kompakt. Es werden daher zur Parametrierung des jeweiligen Abschnitts Kontrollpunkte und Knotenpunkte und gegebenenfalls Gewichte des jeweiligen Splines definiert. Eine derartige Darstellung benötigt in der Regel nur einen relativ geringen Speicherplatz und ist darüber hinaus unabhängig von der gewünschten örtlichen Auflösung. Weisen die Gewichte einen einheitlichen Wert (insbesondere den Wert 1) auf, handelt es sich um einen rationalen Spline. Weisen die Gewichte voneinander verschiedene Werte auf, handelt es sich um einen gebrochen rationalen Spline.

Die Anzahl von Gruppen von Lagewerten ist minimal 1. In diesem Fall wird mittels der (einzigen) Gruppe von Lagewerten ein jeweiliger, momentaner Zustand der Maschine definiert. Alternativ kann die Anzahl von Gruppen von Lagewerten größer als 1 sein. In diesem Fall wird mittels der Gruppen von Lagewerten eine zeitliche Sequenz von jeweiligen momentanen Zuständen der Maschine definiert, also eine Bewegung.

Aufgrund der Modellierung durch Splines wird der entsprechende Teil der Oberfläche des Elements somit durch eine Anzahl von Abschnitten modelliert, die durch jeweilige Parameter parametrierbar sind. Die Abschnitte sind vor deren Parametrierung einheitlich. Die konkrete Wahl der jeweiligen Parameter legt die Lage, die Orientierung und die Kurvenform des jeweiligen Abschnitts der Oberfläche fest.

Im Rahmen der vorliegenden Erfindung werden also die für die Kollisionsrechnung relevanten Elemente der Maschine mittels Oberflächenmodellen dargestellt, wie sie oftmals auch bei CAD-Modellen Verwendung finden. Insbesondere für die Elemente der Maschine liegen die entsprechenden Beschreibungen als solche oftmals bereits vor. In diesem Fall können die Beschreibungen direkt verwendet werden. Somit stellen die Abschnitte der Oberflächen der Elemente der Maschine - im Gegensatz zu einem Netz aus Dreiecken und auch im Gegensatz zu einer Approximation durch elementargeometrische Figuren - eine exakte Darstellung der Elemente der Maschine dar.

Es ist möglich, einzelne Elemente vollständig mittels der entsprechenden Splines zu modellieren. Auch ist es möglich, mehrere Elemente - sogar alle Elemente - teilweise oder vollständig mittels der entsprechenden Splines zu modellieren. In manchen Fällen können jedoch Modellierungen mit elementargeometrischen Figuren oder mit Netzen aus Dreiecken sinnvoll sein. Mindestens eines der Elemente der Maschine ist aber zumindest teilweise auf die erfindungsgemäße Art und Weise modelliert.

Vorzugsweise sind die Oberflächen der Elemente der Maschine für das jeweilige Element der Maschine auf ein Koordinatensystem des jeweiligen Elements der Maschine bezogen und werden anhand der Lagewerte der Ort des Ursprungs des Koordinatensystems des jeweiligen Elements der Maschine und die Orientierung des Koordinatensystems des jeweiligen Elements der Maschine im Arbeitsraum der Maschine transformiert. Dadurch ist eine einfache Transformation des gesamten jeweiligen Elements möglich.

Die Lagewerte der Achsen können nach Bedarf Sollwerte oder Istwerte sein, also entweder die Lagesollwerte oder die Lageistwerte.

Die vom Ergebnis der Prüfung abhängige Reaktion der Überwachungseinrichtung kann insbesondere darin bestehen, dass die Überwachungseinrichtung
- in dem Fall, dass die Prüfung keine drohende Kollision von Elementen der Maschine ergeben hat, die Anzahl von Gruppen von Lagewerten oder auf die Anzahl von Gruppen von Lagewerten zeitlich nachfolgende Gruppen von Lagewerten zur Ausführung freigibt und
- in dem Fall, dass die Prüfung eine drohende Kollision von Elementen der Maschine ergeben hat, die Ausführung der Abfolge von Gruppen von Lagewerten nicht zur Ausführung freigibt und/oder an eine Steuereinrichtung der Maschine einen Befehl zum Anhalten der Maschine übermittelt.

Falls die Lagewerte der Achsen Istwerte sind, müssen in dem Fall, dass keine Kollision droht, Gruppen von Lagesollwerten zur Ausführung freigegeben werden, die zum Zeitpunkt der Prüfung noch nicht ausgeführt sind und demzufolge zeitlich auf die geprüften Lagewerten folgen. Umgekehrt muss in diesem Fall im Falle einer drohenden Kollision an eine Steuereinrichtung der Maschine ein Befehl zum Anhalten der Maschine übermittelt werden. Falls die Lagewerte der Achsen Sollwerte sind, kann dieselbe Vorgehensweise ergriffen werden. In diesem Fall ist es aber vorzuziehen, noch nicht ausgeführte Gruppen von Lagewerten zu überprüfen und in dem Fall, dass keine Kollision droht, die Anzahl von Gruppen von Lagewerten selbst zur Ausführung freizugeben und anderenfalls (falls also eine Kollision droht) die Ausführung der Anzahl von Gruppen von Lagewerten nicht zur Ausführung freizugeben.

Es ist möglich, dass die Überwachungseinrichtung eine von der Steuereinrichtung verschiedene Einrichtung ist. In diesem Fall muss eine "echte" Übermittlung entsprechender Meldungen und Signale erfolgen. Alternativ kann die Überwachungseinrichtung in die Steuereinrichtung integriert sein oder mit der Steuereinrichtung eine Einheit bilden. In diesem Fall kann die Übermittlung entartet sein.

Falls die Lagewerte der Achsen Istwerte sind, muss die genannte Vorgehensweise parallel zur Steuerung der Maschine in Echtzeit ausgeführt werden. Falls die Lagewerte der Achsen Sollwerte sind, ist alternativ eine Ausführung parallel zur Steuerung der Maschine in Echtzeit oder losgelöst von der Steuerung der Maschine möglich.

Zur Kollisionsüberwachung selbst werden im Rahmen der vorliegenden Erfindung nicht die Splines selbst verwendet, sondern nur deren Modellierung, also die Kontrollpunkte und - soweit erforderlich - die Knotenpunkte. Insbesondere wird anhand der Kontrollpunkte des jeweiligen Splines für den jeweiligen Abschnitt eine jeweilige Einhüllende bestimmt, welche das mindestens eine Element in dem jeweiligen Abschnitt einhüllt. Diese Einhüllende umgibt in dem entsprechenden Abschnitt das modellierte Element der Maschine. Gerade Verbindungslinien der Kontrollpunkte des jeweiligen Splines sind die Begrenzungslinien von Flächen der jeweiligen Einhüllenden. Die jeweilige Einhüllende wird als von dem modellierten Element der Maschine in dem jeweiligen Abschnitt eingenommene Oberfläche verwendet. Diese Darstellung ist relativ einfach und vor allen Dingen in der Verarbeitung leicht zu handhaben. Die Vorgehensweise beruht auf dem - Fachleuten allgemein bekannten - Sachverhalt, dass die tatsächliche Oberfläche des modellierten Elements der Maschine, bezogen auf den jeweiligen Abschnitt, innerhalb der so bestimmten Einhüllenden liegt. Die Kollisionsrechnung kann mit der Einhüllenden jedoch erheblich einfacher und schneller erfolgen als mit dem Spline selbst.

In einer besonders bevorzugten Ausgestaltung der vorliegenden Erfindung ist vorgesehen, dass als Knotenpunkte und Kontrollpunkte und gegebenenfalls Gewichte für den jeweiligen Spline zunächst nur Basis-Knotenpunkte und die zugehörigen Kontrollpunkte und gegebenenfalls Gewichte definiert werden und die Überwachungseinrichtung nachfolgende Schritte iterativ ausführt, bis entweder die Prüfung auf Kollision ergibt, dass keine Gefahr einer Kollision droht, oder ein Abbruchkriterium erfüllt ist:
a) Die Überwachungseinrichtung prüft basierend auf einer durch die momentan definierten Kontrollpunkte bestimmten jeweiligen Einhüllenden, ob die Gefahr einer Kollision droht;
b) die Überwachungseinrichtung übernimmt in dem Fall, dass keine Kollision von Elementen der Maschine untereinander droht, das Prüfungsergebnis als endgültig;
c) die Überwachungseinrichtung prüft in dem Fall, dass eine Kollision von Elementen der Maschine droht, ob das Abbruchkriterium erfüllt ist;
d) die Überwachungseinrichtung übernimmt in dem Fall, dass eine Kollision von Elementen der Maschine untereinander droht und das Abbruchkriterium erfüllt ist, das Prüfungsergebnis als endgültig;
e) die Überwachungseinrichtung definiert in dem Fall, dass eine Kollision von Elementen der Maschine untereinander droht und das Abbruchkriterium nicht erfüllt ist, für den jeweiligen Spline zusätzlich zu den momentan definierten Knotenpunkten zusätzliche Knotenpunkte und bestimmt die Kontrollpunkte und gegebenenfalls Gewichte neu, so dass die nunmehr definierten Knotenpunkte und bestimmten Kontrollpunkte und gegebenenfalls Gewichte den selben Spline wie zuvor beschreiben und eine nunmehr bestimmte jeweilige Einhüllende einen geringeren maximalen Abstand von dem jeweiligen Spline aufweist als die vor dem Definieren der zusätzlichen Knotenpunkte und der Neubestimmung der Kontrollpunkte bestimmte jeweilige Einhüllende.

Durch diese Vorgehensweise ist es möglich, zunächst mit einer relativ einfachen Modellierung des entsprechenden Teils des entsprechenden Elements der Maschine zu beginnen und diese einfache Modellierung auf Gefahr einer Kollision zu überprüfen. Wenn bereits mittels der einfachen Modellierung keine Kollision droht, droht auch tatsächlich keine Kollision. Wenn hingegen die Gefahr einer Kollision erkannt wird, kann dies alternativ daran liegen, dass tatsächlich - also auch in der realen Welt - die Gefahr einer Kollision droht oder dass nur die Modellierung nicht genau genug ist. Es kann daher die Prüfung mit einer genaueren Modellierung erneut durchgeführt werden. Diese Vorgehensweise kann fortgesetzt werden, bis entweder keine Gefahr einer Kollision mehr erkannt wird oder das Abbruchkriterium erreicht ist und dennoch auf Kollision erkannt wird.

In aller Regel droht die Gefahr einer Kollision nur bei einigen wenigen Elementen und auch hier nur an einigen wenigen Stellen der modellierten Elemente. Es ist daher möglich, die Wiederholung auf genau diese wenigen Abschnitte zu beschränken. Für die in der Regel weit überwiegende Mehrzahl von Abschnitten führt bereits die erste Ausführung zu dem Ergebnis, dass keine Kollision droht. Für diese Abschnitte muss nicht iteriert werden.

Das Abbruchkriterium wird im Regelfall durch eine hinreichende Annäherung der Einhüllenden an den Spline bestimmt. Insbesondere kann anhand der jeweils momentan definierten Kontrollpunkte auf einfache Art und Weise eine Obergrenze für den Abstand ermittelt werden, den die Einhüllende vom Spline aufweist. Wenn dieser Abstand eine vorgegebene Schwelle unterschreitet, kann dies als Abbruchkriterium verwendet werden. In diesem Fall kann angenommen werden, dass auch bei einer noch genaueren Modellierung immer noch auf Kollision erkannt wird.

Die jeweils zusätzlichen Knotenpunkte werden vorzugsweise derart definiert, dass zumindest ein Teil der jeweils neu bestimmten Kontrollpunkte zwischen dem Anfang und dem Ende des Splines und auf dem Spline liegt. Dadurch wird auf einfache Weise gewährleistet, dass die jeweils nachfolgende Einhüllende einen geringeren maximalen Abstand vom tatsächlichen Spline aufweist als die jeweils vorhergehende Einhüllende.

Bei einer Modellierung mit Splines kann weiterhin im Rahmen der Auswertung mit berücksichtigt werden, dass die Kontrollpunkte eines Splines nur lokal wirken. Im eindimensionalen Fall - d.h. bei einem Spline, der sich im zweidimensionalen Raum erstreckt und bei dem die Art und Weise, wie der Spline sich im zweidimensionalen Raum erstreckt, durch Variable in einer Dimension festgelegt ist - kann ein bestimmter Kontrollpunkt den Verlauf des Splines nur im Rahmen von n vorausgehenden und n nachfolgenden Knotenpunkten beeinflussen. Der Kontrollpunkt hat hingegen keinen Einfluss auf den Verlauf des Splines über die n vorausgehenden und die n nachfolgenden Knotenpunkte hinaus. Der Zahlenwert n hängt von der Komplexität des Splines ab. Er kann beispielsweise 3, 4 oder 5 sein. Dieser vorstehend für einen eindimensionalen Spline erläuterte Sachverhalt gilt in analoger Weise auch für einen zweidimensionalen Spline, also eine Splinefläche.

Die nur lokale Wirksamkeit der Kontrollpunkte kann dadurch verwertet werden,
- dass für die Abschnitte jeweils Gruppen von benachbarten Kontrollpunkten herausgegriffen werden,
- dass für die herausgegriffenen Gruppen jeweils die Einhüllende bestimmt wird und
- dass die Prüfung auf Kollision durch Prüfung der Einhüllenden auf Kollision erfolgt.

Die Größe der Gruppen von benachbarten Kontrollpunkten ist in diesem Fall durch die Komplexität des Splines bestimmt. Weiterhin müssen in diesem Fall alle relevanten Gruppen von benachbarten Kontrollpunkten herausgegriffen werden. Dadurch können im Ergebnis für das entsprechende Element der Maschine viele einzelne kleine Einhüllende ermittelt werden, die sich gegenseitig überlappen und in ihrer Gesamtheit das gesamte entsprechend modellierte Element einhüllen. Die Vorgehensweise muss also hinreichend oft ergriffen werden. Dies kann aber immer noch einfacher und vor allem auch genauer sein, als mit der Einhüllenden einer erheblich größeren Vielzahl von Kontrollpunkten zu arbeiten.

Die Aufgabe wird weiterhin durch ein Computerprogramm mit den Merkmalen des Anspruchs 6 gelöst. Erfindungsgemäß wird ein Computerprogramm der eingangs genannten Art derart ausgestaltet, dass die Abarbeitung des Maschinencodes durch die Überwachungseinrichtung bewirkt, dass die Überwachungseinrichtung ein erfindungsgemäßes Überwachungsverfahren durchführt.

Die Aufgabe wird weiterhin durch eine Überwachungseinrichtung mit den Merkmalen des Anspruchs 7 gelöst. Erfindungsgemäß wird eine Überwachungseinrichtung der eingangs genannten Art mit einem erfindungsgemäßen Computerprogramm programmiert, so dass die Abarbeitung des Maschinencodes durch die Überwachungseinrichtung bewirkt, dass die Überwachungseinrichtung ein erfindungsgemäßes Überwachungsverfahren durchführt.

Die Aufgabe wird weiterhin durch eine Kombination einer Überwachungseinrichtung mit einer Steuereinrichtung mit den Merkmalen des Anspruchs 8 gelöst. Erfindungsgemäß wird eine erfindungsgemäße Überwachungseinrichtung mit einer Steuereinrichtung kombiniert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Maschine mit zugehörige Steuereinrichtung und einer Überwachungseinrichtung,
- FIG 2: eine Gruppe von Sollwerten,
- FIG 3: ein Ablaufdiagramm,
- FIG 4: ein Ablaufdiagramm,
- FIG 5: eine perspektivische Darstellung eines zweidimensionalen Splines,
- FIG 6: einen Abschnitt eines eindimensionalen Splines,
- FIG 7: eine Transformation von Lage und Orientierung deUrsprungs eines Koordinatensystems,
- FIG 8: ein Ablaufdiagramm,
- FIG 9: ein Ablaufdiagramm,
- FIG 10: einen Ausschnitt eines eindimensionalen Splines und
- FIG 11: ebenfalls einen Ausschnitt eines eindimensionalen Splines.

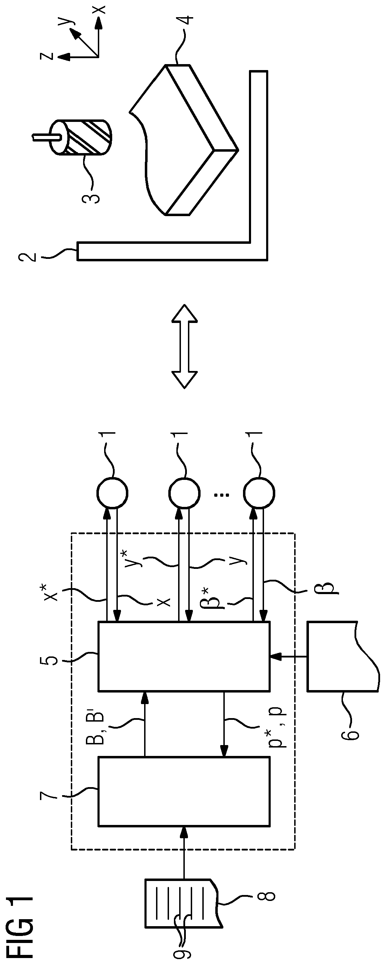

Gemäß FIG 1 weist eine Maschine mehrere Achsen 1 auf. Mittels der Achsen 1 werden Elemente 2 bis 4 der Maschine relativ zueinander lagegeregelt verfahren werden. Das Verfahren der Elemente 2 bis 4 relativ zu einander kann nach Bedarf translatorisch und/oder rotatorisch sein. Dementsprechend werden die Achsen 1 jeweils mit Sollwerten angesteuert, wobei die gleichzeitig an die Achsen 1 ausgegebenen Sollwerte die jeweilige translatorische Positionierung und/oder die jeweilige Orientierung der Elemente 2 bis 4 der Maschine relativ zu einander festlegen. Den Achsen 1 umfassen also jeweils Lageregler, denen ein jeweiliger Lagesollwert und ein jeweiliger Lageistwert vorgegeben werden. Der jeweilige Lageregler ermittelt eine jeweilige Stellgröße, so dass der jeweilige Lageistwert dem jeweiligen Lagesollwert so weit wie möglich angenähert wird. Die jeweilige Stellgröße wird an einen jeweiligen Antrieb der jeweiligen Achse 1 ausgegeben, so dass die Achse 1 entsprechend verfahren wird. Die Gesamtheit der von den Achsen 1 vorgenommenen Verfahrbewegungen korrespondiert mit der Gesamtverfahrbewegung der Maschine.

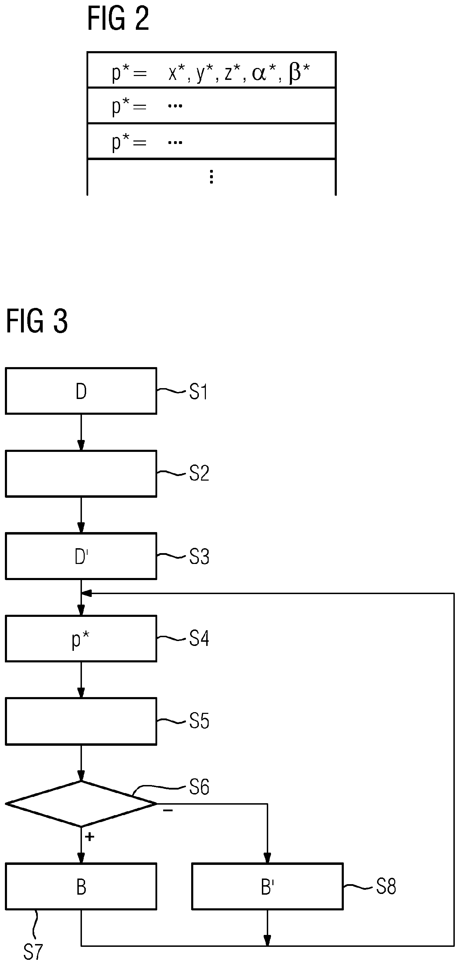

Beispielsweise kann die jeweilige Gruppe von Sollwerten entsprechend der Darstellung in FIG 2 für entsprechende Achsen 1 der Maschine jeweils einen Sollwert x*, y*, z* für die x-Richtung, die y-Richtung und die z-Richtung eines kartesischen Koordinatensystems und/oder jeweils einen Sollwert α*, β* für eine oder zwei Orientierungen innerhalb dieses Koordinatensystems umfassen. Die genaue Art der Sollwerte als solche ist von untergeordneter Bedeutung. Entscheidend ist, dass sie die jeweilige translatorische Positionierung und/oder die jeweilige Orientierung der Elemente 2 bis 4 der Maschine relativ zueinander festlegen.

Die Maschine kann prinzipiell beliebiger Natur sein. Beispielsweise kann die Maschine eine Werkzeugmaschine, eine Produktionsmaschine oder ein Industrieroboter sein. Oftmals ist eines der Elemente 2 bis 4 der Maschine ein ortsfestes Element der Maschine. Beispielsweise kann das Element 2 der Grundkörper der Maschine sein. Weiterhin ist eines der Elemente 2 bis 4 der Maschine ist ein bewegliches Element der Maschine. Beispielsweise kann das Element 3 ein Roboterarm oder - wie hier - ein Werkzeug der Maschine sein. In manchen Fällen ist weiterhin mindestens eines der Elemente 2 bis 4 der Maschine ein Element, dessen Kontur sich während des Betriebs der Maschine ändert. Insbesondere bei Werkstücken einer Werkzeugmaschine ist dies oftmals der Fall.

Die Elemente 2 bis 4 der Maschine sind rein beispielhaft. In der Regel weist die Maschine weitere Elemente auf, die in den FIG nicht dargestellt sind und auf die nachstehend nicht näher eingegangen wird. Auch für diese Elemente können die nachfolgenden Ausführungen jedoch gültig sein.

Jeweils gleichzeitig an die Achsen 1 ausgegebenen Sollwerte werden nachfolgend als Gruppe von Sollwerten bezeichnet. Der entsprechenden Gruppe wird das Bezugszeichen p* zugeordnet. Das Bezugszeichen p* steht also für einen Vektor, der für jede Achse 1 ihren jeweiligen Lagesollwert enthält.

Den Achsen 1 wird eine Anzahl von Gruppen p* von Sollwerten zu geführt. Wenn die Anzahl gleich 1 ist, definiert die (einzige) Gruppe p* von Sollwerten die momentane Stellung der Elemente 2 bis 4 relativ zueinander. Wenn die Anzahl größer als 1 ist, definiert die Anzahl eine zeitliche Abfolge, die den zeitlichen Verlauf der Bewegung der Elemente 2 bis 4 relativ zueinander und damit die Bahnen festlegt, auf denen sich die Elemente 2 bis 4 relativ zueinander bewegen.

Die Maschine wird von einer Steuereinrichtung 5 gesteuert. Die Steuereinrichtung 5 ist in der Regel als numerische Steuerung (CNC) oder hierzu gleichartige Steuerung ausgebildet. Die Steuereinrichtung 5 umfasst in der Regel auch die Lageregler der Achsen 1. Der Steuereinrichtung 5 wird in der Regel ein Nutzprogramm 6 vorgegeben (beispielsweise ein Teileprogramm). Das Nutzprogramm 6 legt in diesem Fall die vorzunehmende Betriebsweise der Maschine fest und definiert dadurch insbesondere die Abfolge der Gruppen p* von Sollwerten. Die Gruppen p* von Sollwerten können jedoch auch auf andere Art und Weise generiert werden. Beispielsweise kann die Maschine in einem manuellen Betrieb arbeiten, in welchem eine Bedienperson der Steuereinrichtung 5 direkt Fahrbefehle vorgibt, welche von der Steuereinrichtung 5 in entsprechende Sollwerte für die lagegeregelten Achsen 1 umgesetzt werden. Auch ist es möglich, dass die anhand des Nutzprogramms 6 generierten Sollwerte von der Steuereinrichtung 5 noch Korrekturen unterzogen werden.

Weiterhin ist eine Überwachungseinrichtung 7 vorhanden. Die Überwachungseinrichtung 7 ist im vorliegenden Fall der Steuereinrichtung 5 zugeordnet. Dies ist in FIG 1 durch eine gestrichelte Umrahmung angedeutet, welche die Steuereinrichtung 5 und die Überwachungseinrichtung 7 einschließt. Aufgrund der Zuordnung bilden die Überwachungseinrichtung 7 und die Steuereinrichtung 5 somit eine entsprechende Kombination. Die vorliegende Erfindung wird nachfolgend in Verbindung mit der entsprechenden Kombination bzw. Zuordnung erläutert. In manchen Ausgestaltungen der vorliegenden Erfindung kann die Überwachungseinrichtung 7 jedoch auch getrennt von der Steuereinrichtung 5 betrieben werden.

Die Überwachungseinrichtung 7 ist mit einem Computerprogramm 8 programmiert. Das Computerprogramm 8 umfasst Maschinencode 9, der von der Überwachungseinrichtung 7 abarbeitbar ist. Die Abarbeitung des Maschinencodes 9 durch die Überwachungseinrichtung 7 bewirkt, dass die Überwachungseinrichtung 7 ein Überwachungsverfahren ausführt, das nachstehend näher erläutert wird.

Gemäß FIG 3 nimmt die Überwachungseinrichtung 7 zunächst in einem Schritt S1 Beschreibungen D der einzelnen Elemente 2 bis 4 der Maschine entgegen. In einem Schritt S2 modelliert die Überwachungseinrichtung 7 anhand der entgegengenommenen Beschreibungen D die Elemente 2 bis 4 der Maschine.

In einem Schritt S3 nimmt die Überwachungseinrichtung 7 eine Beschreibung D' der Kinematik der Maschine entgegen. In einem Schritt S4 nimmt die Überwachungseinrichtung 7 eine Anzahl von Gruppen p* von Sollwerten der Achsen 1 entgegen. Die jeweilige Gruppe p* von Sollwerten definiert die entsprechende Ansteuerung der Achsen 1 und damit die Positionen und/oder Orientierungen der Elemente 2 bis 4 der Maschine relativ zueinander.

In einem Schritt S5 ermittelt die Überwachungseinrichtung 7 - für die Gruppen p* von Sollwerten, welches Element 2 bis 4 der Maschine jeweils welche Oberfläche und/oder welches Volumen in einem Arbeitsraum der Maschine einnimmt. Die Überwachungseinrichtung 7 verwertet hierbei die im Schritt S2 ermittelte Modellierung der Elemente 2 bis 4 der Maschine, die aufgrund des Schrittes S3 gegebene Modellierung der Kinematik der Elemente der Maschine und die jeweilige Gruppe p* von Sollwerten.

In einem Schritt S6 prüft die Überwachungseinrichtung 7, ob eine Kollision von Elementen 2 bis 4 der Maschine untereinander droht. Die Überwachungseinrichtung 7 prüft also im Schritt S6, ob die Gefahr besteht, dass eines der Elemente 2 bis 4 mit einem anderen der Elemente 2 bis 4 kollidiert. Die Prüfung des Schrittes S6 erfolgt unter Verwertung der im Schritt S5 ermittelten Oberflächen und/oder Volumina. Je nachdem, ob im Schritt S6 auf die Gefahr einer Kollision erkannt wird oder nicht, geht die Überwachungseinrichtung 7 zu einem Schritt S7 oder zu einem Schritt S8 über.

In der Regel wird im Rahmen des Schrittes S6 stets auf Kollision erkannt, wenn zwei der Elemente 2 bis 4 der Maschine sich im Arbeitsraum der Maschine zu nahe kommen oder sogar schneiden. Eine Ausnahme kann jedoch für ein Werkzeug (beispielsweise das Element 3) der Maschine und ein Werkstück (beispielsweise das Element 4 der Maschine) bestehen. Hier können in gewissem Umfang Überlappungen hingenommen werden. Welcher Art diese Überlappungen sein dürfen, ist der Überwachungseinrichtung 7 bekannt.

Das Zulassen einer Überlappung von Werkzeug und Werkstück im Rahmen einer Kollisionserkennung ist Fachleuten als solches bekannt. Es muss daher nicht detailliert erläutert werden. Es sei lediglich darauf hingewiesen, dass die Kollisionserkennung als solche, also der Schritt S6, sich nicht von der Vorgehensweise des Standes der Technik unterscheidet. Entscheidend ist der Unterschied in der Art und Weise, auf welche die Oberflächen und Volumina der einzelnen Elemente 2 bis 4 der Maschine ermittelt werden. Dies ist der Gegenstand der vorliegenden Erfindung, nicht aber die Unterscheidung zwischen "erwünschter Kollision" = Bearbeitung und "unerwünschter Kollision".

Den Schritt S7 führt die Überwachungseinrichtung 7 aus, wenn sie eine drohende Kollision von Elementen 2 bis 4 der Maschine untereinander erkannt hat. Es ist möglich, dass die Überwachungseinrichtung 7 im Schritt S7 die Ausführung der Anzahl von Gruppen p* von Sollwerten nicht zur Ausführung freigibt. Diese Vorgehensweise ist insbesondere dann möglich, wenn die Sollwerte auf zukünftige Zeiträume bezogen sind. Alternativ ist es möglich, dass die Überwachungseinrichtung 7 an die Steuereinrichtung 5 einen Befehl zum Anhalten der Maschine übermittelt. Diese Vorgehensweise ist insbesondere dann sinnvoll, wenn die Sollwerte bereits ausgeführte Sollwerte sind. In beiden Fällen kann die Überwachungseinrichtung 7 einen entsprechenden Befehl B an die Steuereinrichtung 5 übermitteln.

Den Schritt S8 führt die Überwachungseinrichtung 7 aus, wenn sie keine drohende Kollision von Elementen 2 bis 4 der Maschine untereinander erkannt hat. Im Schritt S8 kann die Überwachungseinrichtung 7 - beispielsweise durch Übermittlung eines entsprechenden Befehls B' an die Steuereinrichtung 5 - die Anzahl von Gruppen p* von Sollwerten zur Ausführung freigeben. Diese Vorgehensweise ist insbesondere dann möglich, wenn die Sollwerte auf zukünftige Zeiträume bezogen sind. Gegebenenfalls kann sie auch auf die Anzahl von Gruppen p* von Sollwerten zeitlich nachfolgende Gruppen p* von Sollwerten zur Ausführung freigeben. Diese Vorgehensweise ist insbesondere dann sinnvoll, wenn die Sollwerte bereits ausgeführte Sollwerte sind.

Im Rahmen der Vorgehensweise von FIG 3 sind die Lagewerte der Achsen 1 Sollwerte. Sollwerte können vorab bekannt sein. Es ist daher zwar möglich, aber nicht zwingend erforderlich, dass die Überwachungseinrichtung 7 die Vorgehensweise von FIG 3 parallel zur Steuerung der Maschine durch die Steuereinrichtung 5 und in Echtzeit ausführt.

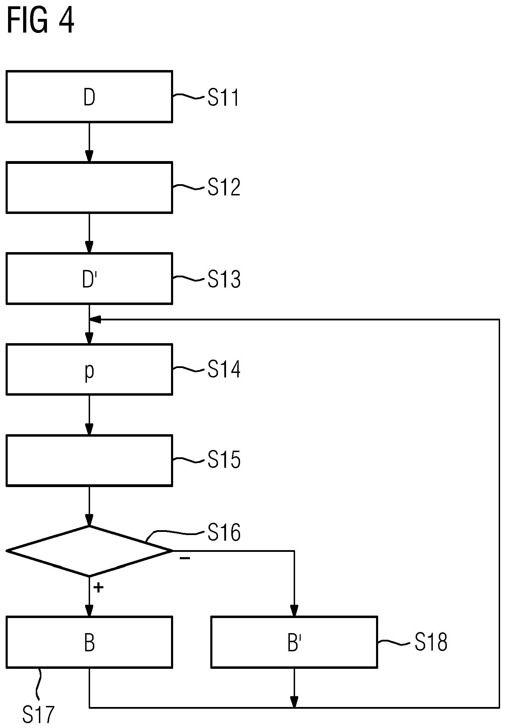

FIG 4 zeigt in ihren Schritten S11 bis S18 eine zu FIG 3 ähnliche Vorgehensweise. Der Unterschied besteht darin, dass die Überwachungseinrichtung 7 im Schritt S14 nicht eine Anzahl von Gruppen p* von Sollwerten der Achsen 1 entgegennimmt, sondern eine Anzahl von Gruppen p von Istwerten der Achsen 1. Daraus ergeben sich verschiedene Unterschiede.

Zunächst muss die Überwachungseinrichtung 7 die Vorgehensweise von FIG 4 parallel zur Steuerung der Maschine durch die Steuereinrichtung 5 und in Echtzeit ausführen.

Weiterhin ist es möglich, dass die Prüfung des Schrittes S16 gegenüber der Prüfung des Schrittes S6 modifiziert werden muss. Denn während im Schritt S6 von FIG 3 ein prinzipiell beliebig kleiner Abstand der Elemente 2 bis 4 der Maschine voneinander zugelassen werden kann, muss im Rahmen des Schrittes S16 bereits auf Kollision erkannt werden, wenn der Abstand einen minimal zulässigen Wert erreicht oder unterschreitet. Denn im Rahmen der Vorgehensweise von FIG 4 muss die Maschine noch rechtzeitig angehalten werden können. Eine Ausnahme kann auch hier für ein Werkzeug der Maschine und ein Werkstück gelten.

Weiterhin muss die Überwachungseinrichtung 7 im Schritt S17 - wenn die Überwachungseinrichtung 7 also eine drohende Kollision von Elementen 2 bis 4 der Maschine untereinander erkannt hat - an die Steuereinrichtung 5 einen Befehl B zum Anhalten der Maschine übermitteln, so dass die Steuereinrichtung 5 die Maschine anhalten kann.

Schließlich signalisiert der im Schritt S18 übermittelte Befehl B, dass die Überwachungseinrichtung 7 die Ausführung von Lagesollwerten freigibt, die auf zukünftige Zeiträume bezogen sind.

Die Abfolge der Schritte der FIG 3 und 4 ist vom Ansatz her die gleiche wie im Stand der Technik auch. Nachfolgend wird daher nur auf die erfindungsgemäßen Ausgestaltungen der einzelnen Schritte eingegangen, soweit dies erforderlich ist. Nachstehend wird hierbei nur auf die Modifikationen der Schritte S1 bis S8 von FIG 3 eingegangen. Für die Schritte S11 bis S18 von FIG 4 gelten analoge Ausführungen.

Zunächst ist der Schritt S1 und die Art und Weise, auf welche der Überwachungseinrichtung 7 die Beschreibungen D der einzelnen Elemente 2 bis 4 vorgegeben werden, auf erfindungsgemäße Art und Weise ausgestaltet. Dies wird nachfolgend für das Element 2 näher erläutert. Für die anderen Elemente 3, 4 der Maschine können analoge Ausführungen gelten.

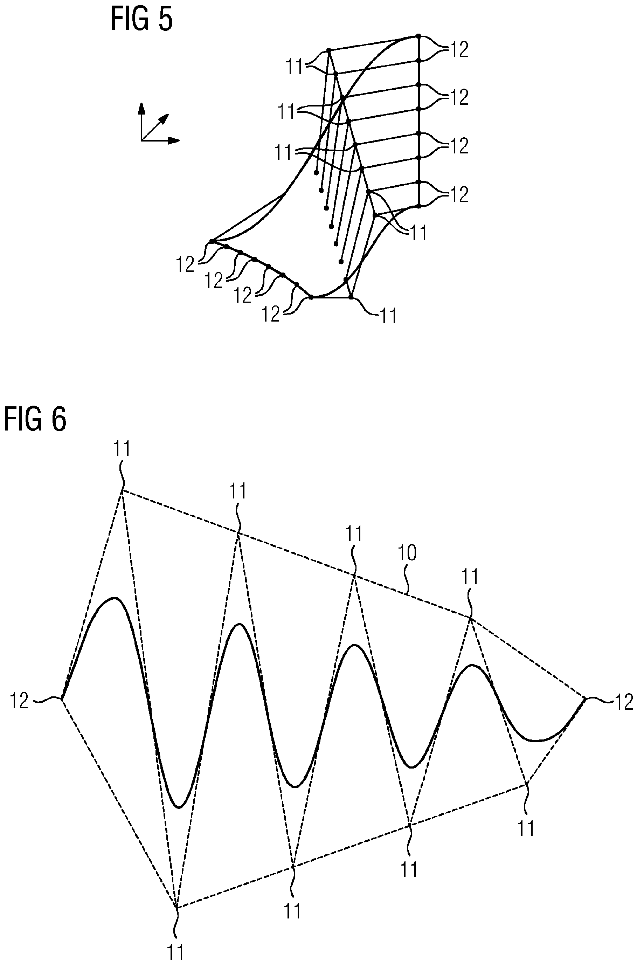

Insbesondere wird die Oberfläche des Elements 2 oder zumindest ein Teil dieser Oberfläche durch eine Anzahl von Abschnitten einer Fläche modelliert. Die einzelnen Abschnitte werden durch jeweilige Parameter parametriert. Beispielsweise werden die in FIG 5 durch schwarze Punkte angedeuteten Stellen im Raum vorgegeben. Vor der Parametrierung - solange also den Parametern, mit denen die Abschnitte parametriert werden, noch keine konkreten Werte zugeordnet sind - sind die Abschnitte einheitlich. Dies gilt sowohl für die Abschnitte der Fläche, durch die das Element 2 beschrieben wird, als auch - sofern mehrere Elemente 2 bis 4 erfindungsgemäß modelliert werden - elementübergreifend für die Flächen, mit denen die anderen Elemente 3, 4 beschrieben werden. Die Abschnitte sind durch die Parameter derart parametrierbar, dass die Parameter - also die konkreten Werte für den jeweiligen Abschnitt der Fläche - die Lage, die Orientierung und die Kurvenform des jeweiligen Abschnitts der Oberfläche des Elements 2 festlegen. Die Abschnitte der Fläche können insbesondere zweidimensionale Splines sein. In diesem Fall erfolgt durch die Parameter in den beiden Dimensionen der Fläche beispielsweise eine Beschreibung durch ein Polynom mindestens 3. Grades.

Im Falle eines zweidimensionalen Splines kann es sich bei den Parametern, mit denen der jeweilige Abschnitt parametriert wird, entsprechend der Darstellung in den FIG 5 und 6 insbesondere um Kontrollpunkte 11 und eine Folge von Knotenpunkten 12 des Splines handeln. Falls der Spline gebrochen rational ist, müssen für die Kontrollpunkte 11 zusätzlich noch Gewichte definiert werden. Kontrollpunkte 11 und Knotenpunkte 12 und auch Gewichte sind Fachleuten als Beschreibung eines rationalen bzw. eines gebrochen rationalen Splines allgemein bekannt. Rein beispielhaft kann auf das Standard-Fachbuch von Carl de Boor: "A Practical Guide to Splines", Springer Verlag Berlin, 2001 verwiesen werden.

Die Beschreibung des Splines durch die Knotenpunkte 12, Kontrollpunkte 11 und gegebenenfalls Gewichte ist eindeutig in dem Sinne, dass die Knotenpunkte 12, Kontrollpunkte 11 und gegebenenfalls Gewichte eindeutig den Spline definieren. Umgekehrt sind jedoch verschiedene Vorgaben für Knotenpunkte 12, Kontrollpunkte 11 und gegebenenfalls Gewichte möglich, die alle denselben Spline ergeben. Auch dies ist Fachleuten allgemein bekannt. Insbesondere können über eine minimal erforderliche Anzahl von Knotenpunkten 12 und die zugehörigen Kontrollpunkte 11 und gegebenenfalls Gewichte hinaus weitere Knotenpunkte 12 und Kontrollpunkte 11 und gegebenenfalls vorgegeben werden, ohne den Spline als solchen zu ändern. Dies erfordert lediglich eine geeignete Wahl der Knotenpunkte 12, Kontrollpunkte 11 und gegebenenfalls Gewichte.

Aufgrund der entsprechenden Vorgabe der Parameter der Abschnitte kann die Überwachungseinrichtung 7 im Schritt S2 insbesondere zunächst die Oberfläche des Elements 2 (und - eine entsprechende Modellierung vorausgesetzt - auch der anderen Elemente 3, 4) der Maschine ermitteln. Soweit erforderlich, kann die Überwachungseinrichtung 7 weiterhin basierend auf der Modellierung der Oberfläche des jeweiligen Elements 2 bis 4 auch das von dem jeweiligen Element 2 bis 4 der Maschine eingenommene Volumen ermitteln. Die Ermittlung der Oberfläche ist bei gegebenen Splines ohne weiteres möglich. Die Ermittlung des eingenommenen Volumens ist bei gegebener Oberfläche ebenfalls ohne weiteres möglich. Diese beiden Vorgänge müssen daher nicht detailliert erläutert werden.

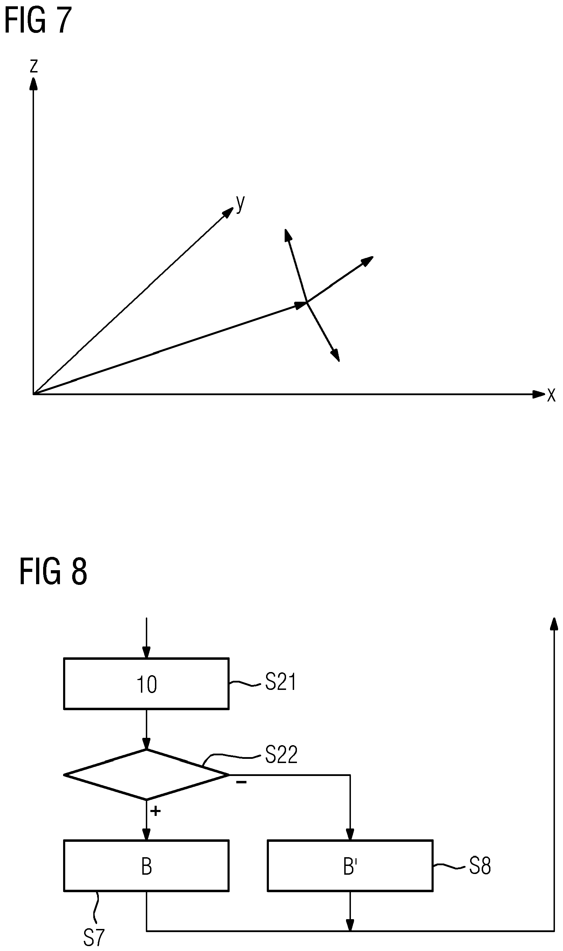

Die Oberfläche des Elements 2 - dies kann, wie bereits erwähnt, in analoger Weise auch für die anderen Elemente 3, 4 der Maschine gelten - sind entsprechend der Darstellung in FIG 5 auf ein Koordinatensystem des Elements 2 bezogen. Anhand der Lagewerte müssen daher lediglich im Schritt S5 die im Schritt S2 ermittelte Oberfläche und/oder das im Schritt S2 ermittelte Volumen im Arbeitsraum der Maschine translatorisch verschoben und rotatorisch orientiert werden. Dies erfolgt, wie in FIG 7 für das Element 2 angedeutet, durch entsprechende Transformation des Ortes des Ursprungs des Koordinatensystems des Elements 2 der Maschine im Arbeitsraum der Maschine und entsprechende Transformation der Orientierung des Koordinatensystems des Elements 2 im Arbeitsraum der Maschine. Der vom Ursprung des Koordinatensystems von FIG 7 ausgehende Pfeil zeigt die translatorische Verschiebung, die andere Orientierung des am Ende des Pfeiles angeordneten Koordinatensystems die Transformation der Orientierung. Analoge Vorgehensweise ergeben sich auch hier gegebenenfalls für die anderen Elemente 3, 4 der Maschine.

Zur Prüfung auf Kollision im Schritt S6 wird entsprechend der Vorgehensweise von FIG 8 vorgegangen:
Zunächst bestimmt die Überwachungseinrichtung 7 in einem Schritt S21 für den entsprechenden Abschnitt eine Einhüllende 10 - siehe exemplarisch für den eindimensionalen Spline FIG 6. Die Überwachungseinrichtung 7 bestimmt die Einhüllende 10 anhand der Kontrollpunkte 11 des jeweiligen Splines. Die Gewichte sind, sofern sie vorgegeben werden, für die Bestimmung der Einhüllenden 10 irrelevant. Die Einhüllende 10 ist aus Gründen der besseren Anschaulichkeit und Darstellung nur in FIG 6 dargestellt. Bei der Einhüllenden 10 sind entsprechend der Darstellung in FIG 6 gerade Verbindungslinien der Kontrollpunkte 11 Begrenzungslinien von Flächen der jeweiligen Einhüllenden 10. Die Einhüllende 10 weist die Eigenschaft auf, dass die tatsächliche Kontur des entsprechenden Abschnitts des modellierten Elements 2 der Maschine innerhalb der Einhüllenden 10 liegt. Die Einhüllende 10 ist leicht zu ermitteln. Weiterhin ist leicht zu ermitteln, ob ein bestimmter Punkt des Arbeitsraums innerhalb der Einhüllenden 10 liegt oder nicht. Insbesondere sind diese Ermittlungen einfacher möglich, als wenn mit dem Spline selbst gerechnet wird. Die Überwachungseinrichtung 7 kann daher im Schritt S22 die Kollisionsüberwachung selbst mit der Einhüllenden 10 vornehmen. Die Überwachungseinrichtung 7 verwendet somit die Einhüllende 10 als von dem jeweils modellierten Element 2 der Maschine in dem jeweiligen Abschnitt eingenommene Oberfläche bzw. dem darauf aufbauend ermittelten Volumen.

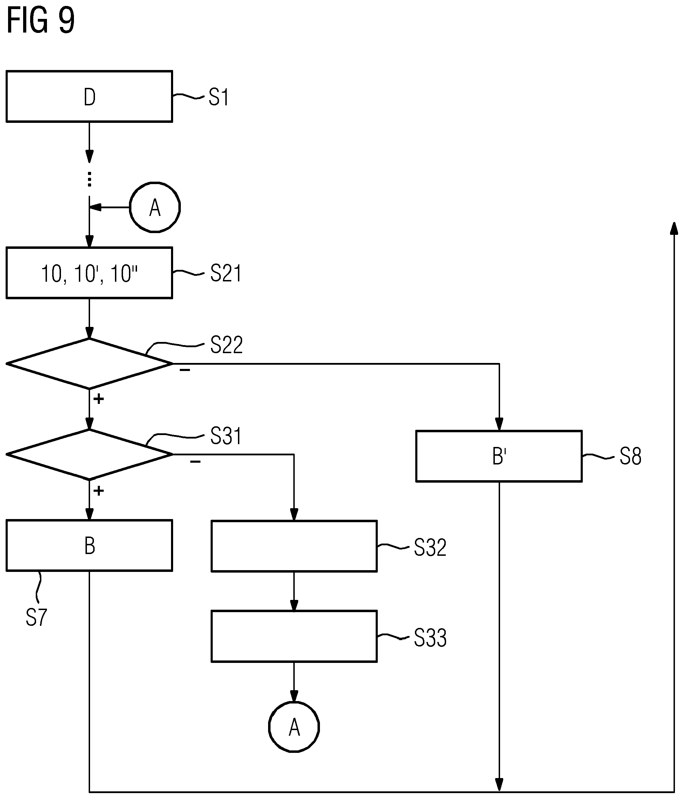

Die Vorgehensweise von FIG 8 kann auf verschiedene Art und Weise ausgestaltet werden. Nachfolgend wird in Verbindung mit FIG 9 eine mögliche derartige Ausgestaltung erläutert.

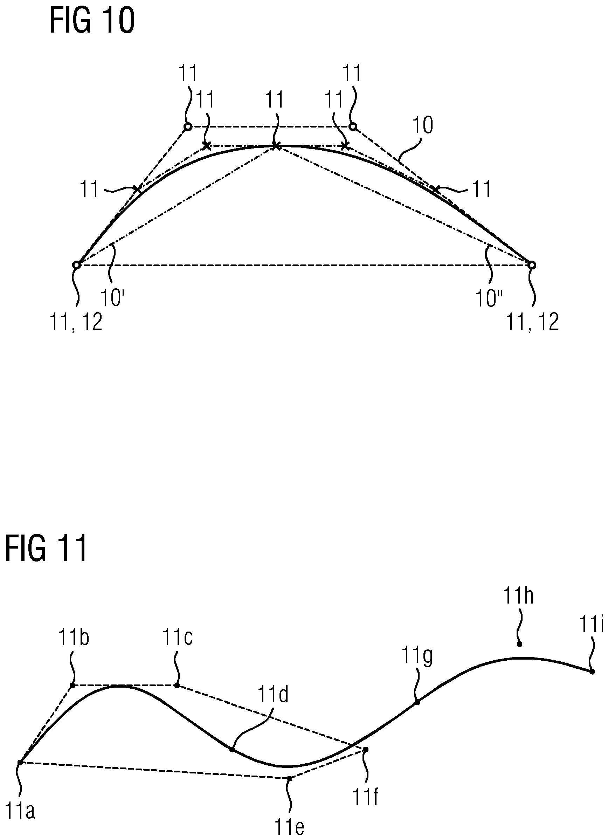

Gemäß FIG 9 werden als Knotenpunkte 12 und Kontrollpunkte 11 für den jeweiligen Spline zunächst nur Basis-Knotenpunkte und die zugehörigen Kontrollpunkte (sowie, sofern erforderlich, die zugehörigen Gewichte) definiert. Diese Definition kann beispielsweise im Rahmen des Schrittes S1 erfolgen. FIG 10 zeigt beispielhaft für einen eindimensionalen Spline derartige Basis-Kontrollpunkte und die dadurch definierte Einhüllende 10. Die Basis-Kontrollpunkte sind als kleine Kreise dargestellt, die Einhüllende 10 als gestrichelte Linie, welche die Basis-Kontrollpunkte verbindet. In durchgezogenen Linien ist der Spline dargestellt. Der Basis-Kontrollpunkt am Anfang des Splines und der Basis-Kontrollpunkt am Ende des Splines liegen auf dem Spline selbst. Die anderen Basis-Kontrollpunkte können im Einzelfall auf dem Spline selbst liegen, liegen im Allgemeinen aber entsprechend der Darstellung in FIG 10 außerhalb des Splines. Die entsprechenden Ausführungen gelten in völlig analoger Weise auch für einen zweidimensionalen Spline.

Der Schritt S21 von FIG 8 als solcher wird im Rahmen der Vorgehensweise von FIG 9 beibehalten. Auch der Schritt S22 als solcher wird beibehalten. Zusätzlich sind jedoch Schritte S31 bis S33 vorhanden. Im Schritt S31 prüft die Überwachungseinrichtung 7, ob ein Abbruchkriterium erfüllt ist. Wenn das Abbruchkriterium erfüllt ist, geht die Überwachungseinrichtung 7 zum Schritt S7 über. Wenn das Abbruchkriterium nicht erfüllt ist, geht die Überwachungseinrichtung 7 zum Schritt S32 über. Im Schritt S32 definiert die Überwachungseinrichtung 7 für den jeweiligen Spline - und zwar zusätzlich zu den vor der Ausführung des Schrittes S32 definierten Knotenpunkten - zusätzliche Knotenpunkte 12 (mindestens einen).

Im Schritt S33 bestimmt die Überwachungseinrichtung 7 die Kontrollpunkte 11 neu. Die Bestimmung des Schrittes S33 erfolgt derart, dass die nunmehr definierten Knotenpunkte 12 und Kontrollpunkte 11 denselben Spline wie zuvor beschreiben. Der Spline selbst wird also nicht verändert. Die neu bestimmten Kontrollpunkte 11 sind in FIG 10 durch kleine Kreuze dargestellt. Vorzugsweise bestimmt die Überwachungseinrichtung 7 mindestens einen der zusätzlichen Knotenpunkte 12 derart, dass zumindest ein Teil der jeweils neu bestimmten Kontrollpunkte 11 zwischen dem Anfang und dem Ende des Splines und auf dem Spline liegt. Sodann geht die Überwachungseinrichtung 7 wieder zum Schritt S21 zurück. Die zusätzlichen Kontrollpunkte 11 sind in FIG 10 ebenfalls durch kleine Kreuze angedeutet.

Aufgrund der konkreten Wahl und Bestimmung der zusätzlichen Knotenpunkte 12 und Kontrollpunkte 11 ist gewährleistet, dass bei der erneuten Ausführung des Schrittes S21 die Einhüllende 10 in mehrere - mindestens zwei - neue Einhüllende 10', 10" aufgeteilt werden kann, wobei die beiden neuen Einhüllenden 10', 10" einen geringeren maximalen Abstand von dem jeweiligen Spline aufweisen als die vorherige Einhüllende 10. Die neuen Einhüllenden 10', 10" sind in FIG 10, soweit sie sich von der Einhüllenden 10 unterscheiden, strichpunktiert dargestellt.

Es ist möglich dass die Abfolge der Schritte S21, S22, S31, S32 und S33 wiederholt ausgeführt wird. In diesem Fall werden immer wieder neue zusätzliche Knotenpunkte 12 definiert, Kontrollpunkte 11 bestimmt und immer wieder neue Einhüllende 10', 10" ermittelt. In jedem Fall aber wird - ausgehend vom Schritt S22 - die Routine von FIG 9 verlassen und zum Schritt S8 übergegangen, wenn keine Kollision von Elementen 2 bis 4 der Maschine untereinander droht. Weiterhin wird in jedem Fall - ausgehend vom Schritt S31 - die Routine von FIG 9 verlassen und zum Schritt S7 übergegangen, wenn eine Kollision von Elementen 2 bis 4 der Maschine untereinander droht. In diesen beiden Fällen wird also das zuletzt im Schritt S22 ermittelte Ergebnis als endgültig übernommen.

Wenn hingegen zwar eine drohende Kollision erkannt wird, das Abbruchkriterium aber nicht erfüllt ist, werden - wie schon erwähnt: gegebenenfalls mehrmals wiederholt - jeweils zusätzlich zu den momentan definierten Knotenpunkten 12 und bestimmten Kontrollpunkten 11 für den jeweiligen Spline zusätzliche Knotenpunkte 12 definiert und Knotenpunkte 11 bestimmt sowie gegebenenfalls Gewichte definiert, so dass eine nunmehr bestimmte jeweilige Einhüllende - bestehend beispielsweise aus den Einhüllenden 10', 10" - einen geringeren maximalen Abstand von dem jeweiligen Spline aufweist als bei der vorherigen Iteration. Die neue Prüfung auf Kollision wird dann mit den neuen Einhüllenden 10', 10" durchgeführt.

Das Abbruchkriterium kann insbesondere dadurch bestimmt sein, dass die ermittelten Einhüllenden 10, 10', 10" sich hinreichend an den Spline selbst annähern, der maximale Abstand also unter einen vorbestimmten Schwellenwert sinkt. Insbesondere ist Fachleuten allgemein bekannt, wie auf einfache und effiziente Weise anhand der momentan definierten Kontrollpunkte 11 eine Obergrenze für den Abstand ermittelt werden kann. Dieser Abstand kann mit dem vorbestimmten Schwellenwert verglichen werden.

Wie weiterhin Fachleuten allgemein bekannt ist, weisen Splines die Eigenschaft auf, dass der jeweilige Spline zwar einerseits durch die Knotenpunkte 12 und die Kontrollpunkte 11 und gegebenenfalls die Gewichte vollständig und eindeutig beschrieben ist, die Kontrollpunkte 11 den Spline jedoch nur innerhalb einer gewissen Umgebung des jeweiligen Kontrollpunkts 11 beeinflussen. Dies wird nachstehend exemplarisch in Verbindung mit FIG 11 für einen eindimensionalen Spline näher erläutert. Die entsprechenden Ausführungen gelten in völlig analoger Weise aber auch für einen zweidimensionalen Spline.

Die Kontrollpunkte 11 sind in FIG 11 zusätzlich entsprechend ihrer Reihenfolge mit einem kleinen Buchstaben a bis i ergänzt. Der Verlauf des Splines beispielsweise im Bereich zwischen den Kontrollpunkten 11c und 11d wird - beispielsweise - durch die Kontrollpunkte 11a bis 11f beeinflusst, aber nicht mehr durch weiter entfernte Kontrollpunkte 11, im vorliegenden Fall also die Kontrollpunkte 11g, 11h und 11i. In analoger Weise wird der Verlauf des Splines beispielsweise im Bereich zwischen den Kontrollpunkten 11d und 11e - beispielsweise - durch die Kontrollpunkte 11b bis 11g beeinflusst, aber nicht mehr durch weiter entfernte Kontrollpunkte 11, im vorliegenden Fall also die Kontrollpunkte 11a, 11h und 11i. Ähnliche Ausführungen gelten für die anderen Bereiche des Splines.

Es ist daher möglich, für die Abschnitte jeweils Gruppen von benachbarten Kontrollpunkten 11 herauszugreifen, beispielsweise für den Bereich zwischen den Kontrollpunkten 11c und 11d die Kontrollpunkte 11a bis 11f, für den Bereich zwischen den Kontrollpunkten 11d und 11e die Kontrollpunkte 11b bis 11g usw. Für jede herausgegriffene Gruppe von benachbarten Kontrollpunkten 11 - dargestellt ist dies in FIG 11 für die Kontrollpunkte 11a bis 11f - kann daher die Einhüllende 10 ermittelt werden. Es ist daher möglich, für den jeweils zugehörigen Bereich - beispielsweise für den Bereich zwischen den Kontrollpunkten 11c und 11d - ausschließlich diese Einhüllende 10 zu verwenden, um die Prüfung auf Kollision durchzuführen.

Die Prüfung muss natürlich für jeden Bereich erfolgen, in dem auf Kollision geprüft werden soll, also gegebenenfalls sowohl für den Bereich zwischen den Kontrollpunkten 11a und 11b als auch für den Bereich zwischen den Kontrollpunkten 11b und 11c usw. Auf Kollision wird im Ergebnis erkannt, wenn sich für einen der geprüften Bereiche eine Kollision ergibt.

Zusammengefasst betrifft die vorliegende Erfindung somit folgenden Sachverhalt:
Eine Maschine weist mehrere Achsen 1 auf, mittels derer Elemente 2 bis 4 der Maschine relativ zueinander lagegeregelt verfahren werden. Eine Überwachungseinrichtung 7 nimmt eine Anzahl von Gruppen p*, p von Lagewerten der Achsen 1 entgegen. Die Gruppen p*, p von Lagewerten legen jeweils die Lage der Elemente 2 bis 4 der Maschine relativ zueinander fest. Die Überwachungseinrichtung 7 ermittelt anhand einer Modellierung der Elemente 2 bis 4, einer Modellierung der Kinematik der Elemente 2 bis 4 für die Gruppen p*, p von Lagewerten der Anzahl von Gruppen p*, p von Lagewerten jeweils, welche Oberflächen und/oder welche Volumina die Elemente 2 bis 4 der Maschine jeweils in einem Arbeitsraum der Maschine einnehmen. Sie prüft anhand der ermittelten Oberflächen und/oder Volumina, ob eine Kollision von Elementen 2 bis 4 der Maschine untereinander droht, und reagiert in Abhängigkeit vom Ergebnis der Prüfung. Die Überwachungseinrichtung 7 modelliert zumindest Teile der Oberflächen der Elemente 2 bis 4 durch zweidimensionale Splines, die ihrerseits durch Knotenpunkte 12 und Kontrollpunkte 11 definiert werden. Sie bestimmt anhand der Kontrollpunkte 11 der Splines für die Abschnitte Einhüllende 10, welche das jeweilige Element 2 bis 4 im jeweiligen Abschnitt einhüllen, und verwendet die jeweilige Einhüllende 10 als von dem jeweiligen Element 2 bis 4 in dem jeweiligen Abschnitt eingenommene Oberfläche. Gerade Verbindungslinien der Kontrollpunkte 11 sind Begrenzungslinien von Flächen der Einhüllenden 10.

Die vorliegende Erfindung weist viele Vorteile auf. So ist insbesondere eine kompakte Datenhaltung möglich und hiermit ein geringer Speicherbedarf erforderlich. Weiterhin müssen in der Praxis oftmals bei einer gewünschten Genauigkeit der Modellierung erheblich weniger einzelne Abschnitte verwendet werden als im Stand der Technik. Weiterhin ergibt sich gegenüber der realen Kontur der Elemente 2 bis 4 kein Genauigkeitsverlust. Dies stellt einen Gegensatz zum Stand der Technik dar, bei dem sich durch die Modellierung stets eine Approximation ergibt. Die Anzahl von Fehlalarmen oder - noch schlimmer - fälschlicherweise nicht erkannten Kollisionen kann deutlich reduziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Überwachungsverfahren für den Betrieb einer Maschine, die mehrere Achsen (1) aufweist, mittels derer Elemente (2 bis 4) der Maschine relativ zueinander lagegeregelt verfahren werden,
- wobei eine Überwachungseinrichtung (7) eine Anzahl von Gruppen (p*, p) von Lagewerten der Achsen (1) entgegennimmt, wobei die Gruppen (p*, p) von Lagewerten jeweils die Lage der Elemente (2 bis 4) der Maschine relativ zueinander festlegen,
- wobei die Überwachungseinrichtung (7) anhand einer Modellierung der Elemente (2 bis 4) der Maschine, einer Modellierung der Kinematik der Elemente (2 bis 4) der Maschine für die Gruppen (p*, p) von Lagewerten der Anzahl von Gruppen (p*, p) von Lagewerten jeweils ermittelt, welches Element (2 bis 4) der Maschine jeweils welche Oberfläche und/oder welches Volumen in einem Arbeitsraum der Maschine einnimmt,
- wobei die Überwachungseinrichtung (7) anhand der ermittelten Oberflächen und/oder Volumina prüft, ob eine Kollision von Elementen (2 bis 4) der Maschine untereinander droht, und
- wobei die Überwachungseinrichtung (7) in Abhängigkeit vom Ergebnis der Prüfung reagiert,
**dadurch gekennzeichnet,**
- **dass** die Überwachungseinrichtung (7) zumindest einen Teil der Oberfläche mindestens eines der Elemente (2 bis 4) der Maschine durch eine Anzahl von zweidimensionalen Splines modelliert, die durch jeweilige Knotenpunkte (12) und jeweilige Kontrollpunkte (11), gegebenenfalls zuzüglich Gewichte, definiert werden,
- **dass** die Überwachungseinrichtung (7) anhand der Kontrollpunkte (11) des jeweiligen Splines für den jeweiligen Abschnitt eine jeweilige Einhüllende (10) bestimmt, welche das mindestens eine Element (2 bis 4) in dem jeweiligen Abschnitt einhüllt,
- **dass** gerade Verbindungslinien der Kontrollpunkte (11) des jeweiligen Splines Begrenzungslinien von Flächen der jeweiligen Einhüllenden (10) sind und
- **dass** die Überwachungseinrichtung (7) die jeweilige Einhüllende (10) als von dem mindestens einen Element (2 bis 4) der Maschine in dem jeweiligen Abschnitt eingenommene Oberfläche verwendet.

2. Überwachungsverfahren nach Anspruch 1,
**dadurch gekennzeichnet,**
**dass** die Oberflächen der Elemente (2 bis 4) der Maschine für das jeweilige Element (2 bis 4) der Maschine auf ein Koordinatensystem des jeweiligen Elements (2 bis 4) der Maschine bezogen sind und dass anhand der Lagewerte der Ort des Ursprungs des Koordinatensystems des jeweiligen Elements (2 bis 4) der Maschine und die Orientierung des Koordinatensystems des jeweiligen Elements (2 bis 4) der Maschine im Arbeitsraum der Maschine transformiert werden.

3. Überwachungsverfahren nach Anspruch 1 oder 2,
**dadurch gekennzeichnet,**
**dass** als Knotenpunkte (12) und Kontrollpunkte (11) und gegebenenfalls Gewichte für den jeweiligen Spline zunächst nur Basis-Knotenpunkte und die zugehörigen Kontrollpunkte und gegebenenfalls Gewichte definiert werden und die Überwachungseinrichtung (7) nachfolgende Schritte iterativ ausführt, bis entweder die Prüfung auf Kollision ergibt, dass keine Gefahr einer Kollision droht, oder ein Abbruchkriterium erfüllt ist:
a) Die Überwachungseinrichtung (7) prüft basierend auf einer durch die momentan definierten Kontrollpunkte (11) bestimmten jeweiligen Einhüllenden (10), ob die Gefahr einer Kollision droht;
b) die Überwachungseinrichtung (7) übernimmt in dem Fall, dass keine Kollision von Elementen (2 bis 4) der Maschine untereinander droht, das Prüfungsergebnis als endgültig;
c) die Überwachungseinrichtung (7) prüft in dem Fall, dass eine Kollision von Elementen (2 bis 4) der Maschine untereinander droht, ob das Abbruchkriterium erfüllt ist;
d) die Überwachungseinrichtung (7) übernimmt in dem Fall, dass eine Kollision von Elementen (2 bis 4) der Maschine untereinander droht und das Abbruchkriterium erfüllt ist, das Prüfungsergebnis als endgültig;
e) die Überwachungseinrichtung (7) definiert in dem Fall, dass eine Kollision von Elementen (2 bis 4) der Maschine untereinander droht und das Abbruchkriterium nicht erfüllt ist, für den jeweiligen Spline zusätzlich zu den momentan definierten Knotenpunkten (12) zusätzliche Knotenpunkte (12) und bestimmt die Kontrollpunkte (11) und gegebenenfalls Gewichte neu, so dass die nunmehr definierten Knotenpunkte (12) und Kontrollpunkte (11) und gegebenenfalls Gewichte denselben Spline wie zuvor beschreiben und eine nunmehr bestimmte jeweilige Einhüllende (10', 10") einen geringeren maximalen Abstand von dem jeweiligen Spline aufweist als die vor dem Definieren der zusätzlichen Knotenpunkte (12) und der Neubestimmung der Kontrollpunkte (11) bestimmte jeweilige Einhüllende (10).

4. Überwachungsverfahren nach Anspruch 3,
**dadurch gekennzeichnet,**
**dass** die jeweils zusätzlichen Knotenpunkte (12) derart definiert werden, dass zumindest ein Teil der jeweils neu bestimmten Kontrollpunkte (11) zwischen dem Anfang und dem Ende des Splines und auf dem Spline liegen.

5. Überwachungsverfahren nach einem der obigen Ansprüche,
**dadurch gekennzeichnet,**
- **dass** für die Abschnitte jeweils Gruppen von benachbarten Kontrollpunkten (11) herausgegriffen werden,
- **dass** für die herausgegriffenen Gruppen jeweils die Einhüllende (10) bestimmt wird und
- **dass** die Prüfung auf Kollision durch Prüfung der Einhüllenden (10) auf Kollision erfolgt.

6. Computerprogramm für eine Überwachungseinrichtung (7), wobei das Computerprogramm Maschinencode (9) umfasst, der von der Überwachungseinrichtung (7) abarbeitbar ist, wobei die Abarbeitung des Maschinencodes (9) durch die Überwachungseinrichtung (7) bewirkt, dass die Überwachungseinrichtung (7) ein Überwachungsverfahren nach einem der obigen Ansprüche durchführt.

7. Überwachungseinrichtung, wobei die Überwachungseinrichtung mit einem Computerprogramm (8) nach Anspruch 6 programmiert ist, so dass die Überwachungseinrichtung im Betrieb ein Überwachungsverfahren nach einem der Ansprüche 1 bis 5 durchführt.

8. Kombination einer Überwachungseinrichtung (7) nach Anspruch 7 mit einer Steuereinrichtung (5) zum Steuern des Betriebs einer Maschine, die mehrere Achsen (1) aufweist, mittels derer Elemente (2 bis 4) der Maschine relativ zueinander lagegeregelt verfahren werden.

## Claims

1. Monitoring method for the operation of a machine having a plurality of axes (1) by means of which elements (2 to 4) of the machine are moved relative to one another in a position-controlled fashion,
- wherein a monitoring facility (7) receives a number of groups (p*, p) of position values of the axes (1), wherein the groups (p*, p) of position values each specify the position of the elements (2 to 4) of the machine relative to one another,
- wherein on the basis of modelling of the elements (2 to 4) of the machine, modelling of the kinematics of the elements (2 to 4) of the machine for the groups (p*, p) of position values of the number of groups (p*, p) of position values in each case, the monitoring facility (7) determines which element (2 to 4) of the machine respectively takes up which surface and/or which volume in a working space of the machine,
- wherein the monitoring facility (7) checks on the basis of the determined surfaces and/or volumes whether there is a risk of elements (2 to 4) of the machine colliding with one another, and
- wherein the monitoring facility (7) reacts in accordance with the result of the check,
**characterised in that**
- the monitoring facility (7) models at least part of the surface of at least one of the elements (2 to 4) of the machine by means of a number of two-dimensional splines which are defined by respective nodes (12) and respective checkpoints (11), if applicable plus weights,
- on the basis of the checkpoints (11) of the respective spline for the respective section, the monitoring facility (7) determines a respective envelope (10) which encloses the at least one element (2 to 4) in the respective section,
- straight connecting lines of the checkpoints (11) of the respective spline are boundary lines of surfaces of the respective envelopes (10) and
- the monitoring facility (7) uses the respective envelope (10) as a surface which is taken up by the at least one element (2 to 4) of the machine in the respective section.

2. Monitoring method according to claim 1,
**characterised in that**
the surfaces of the elements (2 to 4) of the machine for the respective element (2 to 4) of the machine are related to a coordinate system of the respective element (2 to 4) of the machine, and **in that**, on the basis of the position values, the location of the origin of the coordinate system of the respective element (2 to 4) of the machine and the orientation of the coordinate system of the respective element (2 to 4) of the machine are transformed in the working space of the machine.

3. Monitoring method according to claim 1 or 2,
**characterised in that**
as nodes (12) and checkpoints (11) and, if applicable, weights for the respective spline, initially only basic nodes, and the associated checkpoints and, if applicable, weights are defined and the monitoring facility (7) performs the following steps iteratively until either collision testing reveals that there is no risk of a collision, or a stop criterion is met:
a) The monitoring facility (7) checks, based on a respective envelope (10) determined by the currently defined checkpoints (11), whether there is a risk of a collision;
b) the monitoring facility (7) accepts the test result as final in the event that there is no risk of elements (2 to 4) of the machine colliding with one another;
c) the monitoring facility (7) checks whether the stop criterion is met in the event that there is a risk of elements (2 to 4) of the machine colliding with one another;
d) the monitoring facility (7) accepts the test result as final in the event that there is a risk of elements (2 to 4) of the machine colliding with one another and the stop criterion is met;
e) in the event that there is a risk of elements (2 to 4) of the machine colliding with one another and the stop criterion is not met, the monitoring facility (7) defines additional nodes (12) for the respective spline in addition to the currently defined nodes (12) and determines the checkpoints (11) and, if necessary, weights again, so that the now defined nodes (12) and checkpoints (11) and, if necessary, weights, describe the same spline as before and a respective envelope (10', 10") now determined is at a shorter maximum distance from the respective spline than the respective envelope (10) determined before the definition of the additional nodes (12) and the new determination of the checkpoints (11).

4. Monitoring method according to claim 3,
**characterised in that**
the respective additional nodes (12) are defined in such a way that at least some of the newly determined checkpoints (11) lie between the beginning and the end of the spline and on the spline.

5. Monitoring method according to one of the above claims,
**characterised in that**
- groups of adjacent checkpoints (11) are respectively singled out for the sections,
- the envelope (10) is determined in each case for the groups singled out and
- collision testing is carried out by collision testing the envelope (10).

6. Computer program for a monitoring facility (7), wherein the computer program comprises machine code (9) which can be processed by the monitoring facility (7), wherein the processing of the machine code (9) by the monitoring facility (7) causes the monitoring facility (7) to carry out a monitoring method according to one of the above claims.

7. Monitoring facility, wherein the monitoring facility is programmed using a computer program (8) according to claim 6, such that during operation the monitoring facility performs a monitoring method according to one of the claims 1 to 5.

8. Combination of a monitoring facility (7) according to claim 7 with a control facility (5) for controlling the operation of a machine having a plurality of axes (1) by means of which elements (2 to 4) of the machine are moved relative to one another in a position-controlled fashion.

## Revendications

1. Procédé de contrôle du fonctionnement d'une machine qui a plusieurs axes (1), au moyen desquels des éléments (2 à 4) de la machine sont déplacés les uns par rapport aux autres d'une manière réglée en position,
- dans lequel un dispositif (7) de contrôle reçoit un certain nombre de groupes (p*, p) de valeurs de position des axes (1), dans lequel les groupes (p*, p) de valeurs de position fixent respectivement la position des éléments (2 à 4) de la machine les uns par rapport aux autres,
- dans lequel le dispositif (7) de contrôle détermine respectivement, à l'aide d'une modélisation des éléments (2 à 4) de la machine, d'une modélisation de la cinématique des éléments (2 à 4) de la machine pour les groupes (p*, p) et de valeurs de position du nombre de groupes (p*, p) et de valeurs de position, quel élément (2 à 4) de la machine occupe respectivement quelle surface et/ou quel volume dans un espace de travail de la machine,
- dans lequel le dispositif (7) de contrôle contrôle, à l'aide des surfaces et/ou des volumes déterminés, si une collision d'éléments (2 à 4) de la machine entre eux est menaçante et
- dans lequel le dispositif (7) de contrôle réagit en fonction du résultat du contrôle,
**caractérisé en ce que**
- le dispositif (7) de contrôle modélise au moins une partie de la surface d'au moins l'un des éléments (2 à 4) de la machine par un nombre de splines en deux dimensions qui sont définis par des points (12) nodaux respectifs et des points (11) de contrôle respectifs additionnés le cas échéant de poids, **en ce que**
- le dispositif (7) de contrôle détermine, à l'aide des points (11) de contrôle du spline respectif pour la partie respective, une enveloppe (10) respective, qui enveloppe au moins un élément (2 à 4) dans la partie respective, **en ce que**
- des lignes droites de liaison des points (11) de contrôle du spline respectif sont des lignes de démarcation de surfaces des enveloppes (10) respectives et
- le dispositif (7) de contrôle utilise les enveloppes (10) respectives comme surface occupée dans la partie respective par au moins un élément (2 à 4) de la machine.

2. Procédé de contrôle suivant la revendication 1, **caractérisé en ce que**
les surfaces des éléments (2 à 4) de la machine sont pour l'élément (2 à 4) respectif de la machine rapporté un système de coordonnées de l'élément (2 à 4) respectif de la machine et **en ce que**, à l'aide des valeurs de position, on transforme l'emplacement de l'origine du système de coordonnées de l'élément (2 à 4) respectif de la machine et l'orientation du système de coordonnées de l'élément (2 à 4) respectif de la machine dans l'espace de travail de la machine.

3. Procédé de contrôle suivant la revendication 1 ou 2, **caractérisé en ce que** l'
on définit comme points (12) nodaux et comme points (11) de contrôle, et le cas échéant des poids pour le spline respectif, d'abord seulement des points nodaux de base et les points de contrôle associés et le cas échéant des poids et le dispositif (7) de contrôle effectue de manière itérative les stades suivants, jusqu'à ce que le contrôle de collision indique qu'un danger d'une collision n'est pas menaçante ou bien qu'un critère d'arrêt est satisfait :
a) le dispositif (7) de contrôle contrôle, sur la base d'une enveloppe (10) respective déterminée par les points (11) de contrôle définis dans l'instant, si le danger d'une collision est menaçant ;
b) le dispositif (7) de contrôle prend, dans le cas où une collision d'éléments (2 à 4) de la machine entre eux n'est pas menaçante, le résultat du contrôle comme définitif ;
c) le dispositif (7) de contrôle contrôle, dans le cas où une collision d'éléments (2 à 4) de la machine entre eux est menaçante, si le critère d'arrêt est satisfait ;
d) le dispositif (7) de contrôle prend, dans le cas où une collision d'éléments (2 à 4) de la machine entre eux est menaçante et où le critère d'arrêt est satisfait, le résultat du contrôle comme définitif ;
e) le dispositif (7) de contrôle définit, dans le cas où une collision d'éléments (2 à 4) de la machine entre eux est menaçante et où le critère d'arrêt n'est pas satisfait, pour le spline respectif, en plus des points (12) nodaux définis dans l'instant, des points (12) nodaux supplémentaires et redétermine les points (11) de contrôle et le cas échéant des poids, de manière à ce que les points nodaux (12) et les points (11) de contrôle définis maintenant et le cas échéant des poids décrivent le même spline qu'auparavant et de manière à ce qu'une enveloppe (10', 10'') respective déterminée maintenant ait une distance maximum plus petite au spline respectif que l'enveloppe (10) respective déterminée avant la définition des points (12) nodaux supplémentaires et la redétermination des points (11) de contrôle.

4. Procédé de contrôle suivant la revendication 3,
**caractérisé**
**en ce que** l'on définit les points (12) nodaux supplémentaires respectifs de manière à ce qu'au moins une partie des points (11) de contrôle respectifs redéterminés se trouvent entre le début et la fin du spline et sur le spline.

5. Procédé de contrôle suivant l'une des revendications précédentes,
**caractérisé**
- **en ce que** l'on sélectionne pour les parties respectivement des groupes de points (11) de contrôle voisins,
- **en ce que** l'on détermine pour les groupes sélectionnés respectivement l'enveloppe (10) et,
- **en ce que** le contrôle de collision s'effectue par contrôle de collision des enveloppes (10).

6. Programme d'ordinateur pour un dispositif (7) de contrôle, dans lequel le programme d'ordinateur comprend un code machine (9) qui peut être élaboré par le dispositif (7) de contrôle, dans lequel l'élaboration du code machine (9) par le dispositif (7) de contrôle fait que le dispositif (7) de contrôle effectue un procédé de contrôle suivant l'une des revendications précédentes.

7. Dispositif de contrôle, dans lequel le dispositif de contrôle est programmé par un programme (8) d'ordinateur suivant la revendication 6 de manière à ce que le dispositif de contrôle effectue en fonctionnement un procédé de contrôle suivant l'une des revendications 1 à 5.

8. Combinaison d'un dispositif (7) de contrôle suivant la revendication 7 avec un dispositif (5) de commande pour la commande de fonctionnement d'une machine, qui a plusieurs axes (1), au moyen desquels des éléments (2 à 4) de la machine sont déplacés les uns par rapport aux autres d'une manière réglée en position.
